# EUROPÄISCHE PATENTANMELDUNG

(11) **EP 3 648 333 A1**
(43) Veröffentlichungstag der Anmeldung: **06.05.2020**
(21) Anmeldenummer: 18203379.5
(22) Anmeldetag: 30.10.2018
(51) Int. Cl.: H02M 7/5387, H02P 27/08

(54) **RAUMZEIGERMODULATIONSVERFAHREN MIT BERÜCKSICHTIGUNG VON MINDESTSCHALTZUSTANDSZEITEN ZUM STEUEREN EINER MEHRPHASIGEN ELEKTRISCHE MASCHINE**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft ein Verfahren und einen Stromrichter (1) zum Steuern einer mehrphasigen elektrischen Maschine (3). Jede Phasenspannung der elektrischen Maschine (3) wird mit zwei zu einer Halbbrücke (5, 6, 7) verschalteten elektronischen Schaltern (9, 10) erzeugt. Die Schaltzustände der Halbbrücken (5, 6, 7) werden mit einer Raumzeigermodulation gesteuert, wobei eine Mindestverweilzeit vorgegeben wird und jeder von einem aktiven Grundspannungsraumzeiger (15, 16, 17) repräsentierte Schaltzustand der Halbbrücken (5, 6, 7) wenigstens für die Mindestverweilzeit beibehalten wird.

## Beschreibung

Die Erfindung betrifft ein Verfahren und einen Stromrichter zum Steuern einer mehrphasigen elektrischen Maschine, wobei jede Phasenspannung der elektrischen Maschine mit zwei zu einer Halbbrücke verschalteten elektronischen Schaltern erzeugt wird und die Schaltzustände der Halbbrücken mit einer Raumzeigermodulation gesteuert werden.

Bei einer Raumzeigermodulation wird jeder Schaltzustand der Halbbrücken durch einen Grundspannungsraumzeiger repräsentiert und für aufeinander folgende Pulsperioden der Raumzeigermodulation wird jeweils ein Sollraumzeiger vorgegeben. Der Sollraumzeiger wird nach dem Prinzip der Pulsweitenmodulation durch einen Wechsel der Grundspannungsraumzeiger innerhalb der jeweiligen Pulsperiode als ein zeitlicher Mittelwert über die Pulsperiode realisiert.

Zwischen den Anschlussklemmen einer derartig mit einer Raumzeigermodulation gesteuerten elektrischen Maschine treten erhöhte Spannungen auf, wenn zwei der Halbbrücken gleichzeitig oder fast gleichzeitig entgegengesetzt zueinander umgeschaltet werden. Deshalb wird die Raumzeigermodulation in der Regel derart realisiert, dass ein gleichzeitiges zueinander entgegengesetztes Umschalten zweier Halbbrücken vermieden wird. Eine erhöhte Leiter-Erde-Spannung tritt an einer elektrischen Maschine jedoch auch auf, wenn zwei Halbbrücken gleichzeitig oder fast gleichzeitig gleichartig umgeschaltet werden.

Der Erfindung liegt die Aufgabe zugrunde, ein Verfahren und eine Vorrichtung zum verbesserten Steuern einer mehrphasigen elektrischen Maschine mit einer Raumzeigermodulation anzugeben.

Die Aufgabe wird erfindungsgemäß durch ein Verfahren mit den Merkmalen des Anspruchs 1 und einen Stromrichter mit den Merkmalen des Anspruchs 13 gelöst.

Vorteilhafte Ausgestaltungen der Erfindung sind Gegenstand der Unteransprüche.

Bei dem erfindungsgemäßen Verfahren zum Steuern einer mehrphasigen elektrischen Maschine wird jede Phasenspannung der elektrischen Maschine mit zwei zu einer Halbbrücke verschalteten elektronischen Schaltern erzeugt und die Schaltzustände der Halbbrücken werden mit einer Raumzeigermodulation gesteuert. Dabei wird eine Mindestverweilzeit vorgegeben und jeder von einem aktiven Grundspannungsraumzeiger repräsentierte Schaltzustand der Halbbrücken wird wenigstens für die Mindestverweilzeit beibehalten.

Durch die Mindestverweilzeit wird vermieden, dass die Zeitdauer eines von einem aktiven Grundspannungsraumzeiger repräsentierten Schaltzustands so klein wird, dass die vor und nach diesem Schaltzustand eingestellten Schaltzustände fast instantan aufeinander folgen, wodurch ein fast gleichzeitiges gleichartiges Umschalten zweier Halbbrücken erzeugt werden kann. Durch die Vermeidung eines derartigen Umschaltens der Halbbrücken wird eine Leiter-Erde-Spannungsbelastung der elektrischen Maschine reduziert. Dadurch kann die Isolationsfestigkeit der elektrischen Maschine niedriger bemessen und die elektrische Maschine besser ausgenutzt werden, indem weniger Isolationsmaterial in die Nuten, durch die Spulenwicklungen der elektrischen Maschine verlaufen, eingebracht wird und dieser Raum für die Spulenwicklungen genutzt wird.

Eine Ausgestaltung der Erfindung sieht vor, dass für jede Pulsperiode der Raumzeigermodulation ein Sollraumzeiger für einen über die Pulsperiode gemittelten Schaltzustandsmittelwert der Schaltzustände der Halbbrücken vorgegeben wird, und dass, wenn der von dem Sollraumzeiger repräsentierte Schaltzustandsmittelwert nicht realisiert werden kann, ein Schaltzustandsmittelwert eingestellt wird, der von einem wenig von dem Sollraumzeiger abweichenden Ersatzraumzeiger repräsentiert wird. Beispielsweise stimmt der Raumzeigerbetrag des Ersatzraumzeigers mit dem Raumzeigerbetrag des Sollraumzeigers überein und der Raumzeigerwinkel des Ersatzraumzeigers weicht möglichst wenig von dem Raumzeigerwinkel des Sollraumzeigers ab. Alternativ wird zur Bildung des Ersatzraumzeigers eine Zeitdauer verkürzt, in der der Schaltzustand der Halbbrücken innerhalb der Pulsperiode von einem der aktiven Grundspannungsraumzeiger repräsentiert wird. Dabei wird vorzugsweise die Zeitdauer desjenigen aktiven Grundspannungsraumzeigers verkürzt, der am längsten innerhalb der Pulsperiode zur Realisierung des Sollraumzeigers verwendet werden würde.

Die vorgenannten Ausgestaltungen der Erfindung berücksichtigen, dass infolge der für aktive Grundspannungsraumzeiger vorgegebenen Mindestverweilzeit nicht jeder von einem Sollraumzeiger repräsentierte Schaltzustandsmittelwert realisiert werden kann. Im Falle eines nicht realisierbaren Sollraumzeigers sieht die Erfindung daher vor, statt des Sollraumzeigers einen Ersatzraumzeiger zu realisieren, der nur wenig von dem Sollraumzeiger abweicht.

Eine weitere Ausgestaltung der Erfindung sieht vor, dass ein Differenzraumzeiger zwischen dem Sollraumzeiger und dem Ersatzraumzeiger einer Pulsperiode gebildet wird und der Sollraumzeiger der auf die Pulsperiode folgenden Pulsperiode in Abhängigkeit von dem Differenzraumzeiger gegenüber einem ursprünglich für die folgende Pulsperiode vorgegebenen Sollraumzeiger modifiziert wird. Beispielsweise wird der Sollraumzeiger einer Pulsperiode durch den Differenzraumzeiger der vorhergehenden Pulsperiode modifiziert, indem der Differenzraumzeiger zu dem ursprünglich für die Pulsperiode vorgegebenen Sollraumzeiger addiert wird. Alternativ wird der Sollraumzeiger einer Pulsperiode durch den Differenzraumzeiger der vorhergehenden Pulsperiode modifiziert, indem der Differenzraumzeiger um einen Differenzwinkel zwischen dem Raumzeigerwinkel des ursprünglich für die Pulsperiode vorgegebenen Sollraumzeigers und dem Raumzeigerwinkel des Sollraumzeigers der vorhergehenden Pulsperiode gedreht wird und der gedrehte Differenzraumzeiger zu dem ursprünglich für die Pulsperiode vorgegebenen Sollraumzeiger addiert wird.

Die vorgenannten Ausgestaltungen der Erfindung ermöglichen, eine Sollwertabweichung einer Spannungs-Zeit-Fläche, die in einer Pulsperiode durch die Verwendung eines Ersatzraumzeigers anstelle des Sollraumzeigers verursacht wird, in einer darauf folgenden Pulsperiode auszugleichen, indem der Sollwertzeiger der folgenden Pulsperiode in Abhängigkeit von der Abweichung des Ersatzraumzeigers von dem Sollraumzeiger modifiziert wird.

Eine weitere Ausgestaltung der Erfindung sieht vor, dass als Mindestverweilzeit mindestens das Doppelte einer Zeitdauer zwischen einer Schaltzustandsänderung eines Schaltzustands der Halbbrücken und der durch die Schaltzustandsänderung erzeugten Phasenspannungsänderung der Phasenspannungen der elektrischen Maschine vorgegeben wird. Diese Zeitdauer ist beispielsweise eine Signallaufzeit eines Signals in einem Verbindungskabel, das die elektrische Maschine mit einem die Halbbrücken aufweisenden Stromrichter verbindet.

Alternativ zu der vorgenannten Ausgestaltung der Erfindung wird als Mindestverweilzeit beispielsweise der Kehrwert einer von einer Längsinduktivität und einer Wicklungskapazität der elektrischen Maschine abhängigen Resonanzfrequenz der elektrischen Maschine vorgegeben.

Die beiden vorgenannten Ausgestaltungen der Erfindung passen die Mindestverweilzeit vorteilhaft den physikalischen Eigenschaften der elektrischen Maschine und deren Ankopplung an die Halbbrücken an. Die Anpassung der Mindestverweilzeit an die Resonanzfrequenz der elektrischen Maschine hat insbesondere den Vorteil, dass dadurch auch eine Spannungsbelastung an einem Sternpunkt der elektrischen Maschine gesenkt werden kann.

Eine weitere Ausgestaltung der Erfindung sieht vor, dass sich je zwei aufeinander folgende Schaltzustände der Halbbrücken nur durch die Schalterstellungen genau einer Halbbrücke voneinander unterscheiden. Dadurch werden vorteilhaft Spannungsbelastungen durch ein gleichzeitiges Umschalten von zwei oder mehr Halbbrücken vermieden.

Eine weitere Ausgestaltung der Erfindung sieht vor, dass eine Schalterstellungsmindestzeit vorgegeben wird und eine Schalterstellung jeder Halbbrücke wenigstens für die Schalterstellungsmindestzeit beibehalten wird. Dadurch werden vorteilhaft Spannungsbelastungen durch schnelle Änderungen der Phasenspannungen einzelner Phasen vermieden.

Bei einer weiteren Ausgestaltung der Erfindung wird das erfindungsgemäße Verfahren nur aktiviert, wenn die elektrische Maschine mit Phasenspannungen, deren Amplituden in einem vorgegebenen Spannungsbereich liegen, betrieben wird. Dabei wird für die Aktivierung des Verfahrens ein Spannungsbereich vorgegeben, in dem die elektrische Maschine einer Spannungsbelastung ausgesetzt ist, für die sie bei einem Steuerungsverfahren mit einer herkömmlichen Raumzeigermodulation nicht ausgelegt ist. Bei Phasenspannungen außerhalb dieses Spannungsbereiches wird die elektrische Maschine dagegen vorzugsweise mit einer herkömmlichen Raumzeigermodulation gesteuert. Dadurch wird berücksichtigt, dass bei der erfindungsgemäß modifizierten Raumzeigermodulation ein Rippelstrom in der elektrischen Maschine gegenüber einer herkömmlichen Raumzeigermodulation leicht ansteigt, so dass die erfindungsgemäß modifizierte Raumzeigermodulation gegenüber der herkömmlichen Raumzeigermodulation nur bei Spannungsbelastungen der elektrischen Maschine vorteilhaft ist, für die sie bei einem Steuerungsverfahren mit einer herkömmlichen Raumzeigermodulation nicht ausgelegt ist.

Ein erfindungsgemäßer Stromrichter zur Durchführung des erfindungsgemäßen Verfahrens umfasst für jede Phasenspannung zwei zu einer Halbbrücke verschaltete elektronische Schalter und eine Steuereinheit zur Ansteuerung der elektronischen Schalter gemäß dem erfindungsgemäßen Verfahren. Die Vorteile eines derartigen Stromrichters entsprechen den oben bereits genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 ein Blockdiagramm eines Stromrichters und einer an dem Stromrichter betriebenen elektrischen Maschine,
FIG 2 einen Ausschnitt einer Raumzeigerebene mit einem Sollraumzeiger und Grundspannungsraumzeigern,
FIG 3 gemäß einer ersten Ausführungsvariante der Erfindung gebildete Sollraumzeiger aufeinander folgender Pulsperioden einer Raumzeigermodulation,
FIG 4 gemäß einer zweiten Ausführungsvariante der Erfindung gebildete Sollraumzeiger aufeinander folgender Pulsperioden einer Raumzeigermodulation.

Einander entsprechende Teile sind in den Figuren mit denselben Bezugszeichen versehen.

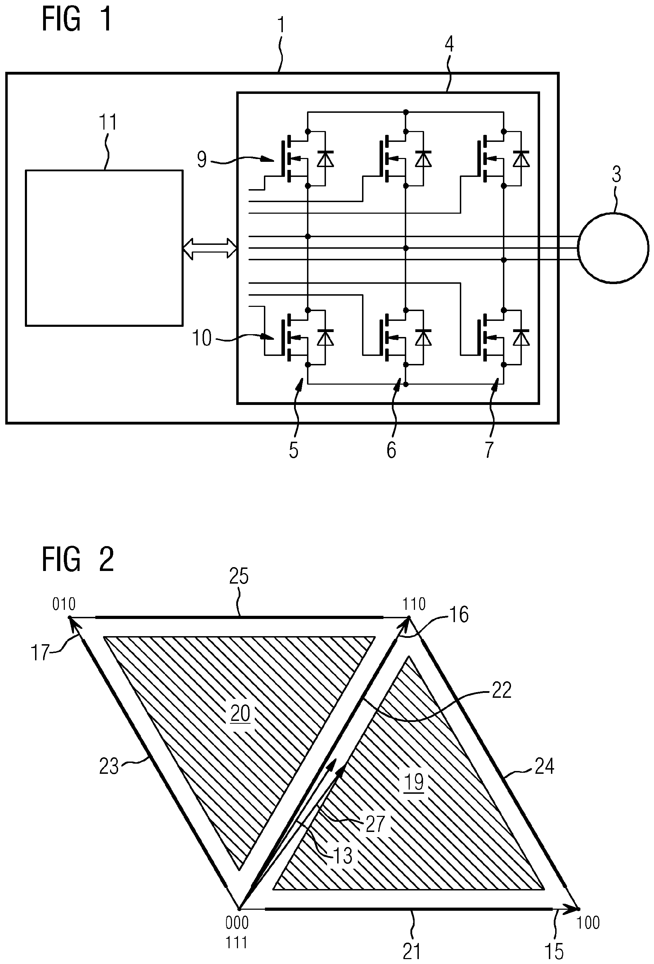

Figur 1 zeigt ein Blockdiagramm eines Stromrichters 1 und einer an dem Stromrichter 1 betriebenen dreiphasigen elektrischen Maschine 3. Die elektrische Maschine 3 ist beispielsweise als ein bürstenloser Gleichstrommotor ausgebildet. Der Stromrichter 1 umfasst einen ausgangsseitigen Wechselrichter 4, der für jede Phase der elektrischen Maschine 3 eine elektrische Halbbrücke 5, 6, 7 aufweist, in deren beiden Brückenarmen jeweils ein elektronischer Schalter 9, 10 angeordnet ist und deren Brückenzweig mit einer Spulenwicklung der jeweiligen Phase der elektrischen Maschine 3 verbunden ist. Eingangsseitig weist der Stromrichter 1 einen (hier nicht dargestellten) Gleichrichter auf, der mit dem Wechselrichter 4 über einen (hier ebenfalls nicht dargestellten) Gleichspannungszwischenkreis verbunden ist. Jeder elektronische Schalter 9, 10 ist als ein MOSFET (Metall-Oxid-Halbleiter-Feldeffekttransistor) ausgebildet, kann alternativ aber auch beispielsweise als ein IGBT (Bipolartransistor mit isolierter Gate-Elektrode) ausgebildet sein. Ferner weist der Stromrichter 1 eine Steuereinheit 11 zur Ansteuerung der elektronischen Schalter 9, 10 gemäß dem unten anhand der Figuren 2 bis 4 näher beschriebenen Verfahren auf.

Figur 2 zeigt einen Ausschnitt einer Raumzeigerebene mit einem Sollraumzeiger 13 und Grundspannungsraumzeigern 15, 16, 17. Jeder Grundspannungsraumzeiger 15, 16, 17 repräsentiert einen Schaltzustand der Halbbrücken 5, 6, 7, der durch ein Zifferntripel dargestellt wird, dessen drei Ziffern jeweils die Werte 0 oder 1 annehmen können und jeweils einer Halbbrücke 5, 6, 7 zugeordnet sind. Der Wert 1 einer Ziffer des Zifferntripels steht für eine Schalterstellung der dieser Ziffer zugeordneten Halbbrücke 5, 6, 7, bei der ein erster elektronischer Schalter 9 der Halbbrücke 5, 6, 7 eingeschaltet und der zweite elektronische Schalter 10 ausgeschaltet ist, wodurch die mit der Halbbrücke 5, 6, 7 verbundene Spulenwicklung der elektrischen Maschine 3 auf ein positives elektrisches Potential des Gleichspannungszwischenkreises des Stromrichters 1 gelegt wird. Der Wert 0 einer Ziffer des Zifferntripels steht für eine Schalterstellung der dieser Ziffer zugeordneten Halbbrücke 5, 6, 7, bei der der erste elektronische Schalter 9 der Halbbrücke 5, 6, 7 ausgeschaltet und der zweite elektronische Schalter 10 eingeschaltet ist, wodurch die mit der Halbbrücke 5, 6, 7 verbundene Spulenwicklung der elektrischen Maschine 3 auf ein negatives elektrisches Potential des Gleichspannungszwischenkreises des Stromrichters 1 gelegt wird. Die Grundspannungsraumzeiger, die einen Schaltzustand repräsentieren, der durch eines der Zifferntripel 100, 010, 001, 110, 101 oder 011 dargestellt wird, werden als aktive Grundspannungsraumzeiger bezeichnet. Die beiden Grundspannungsraumzeiger, die einen Schaltzustand repräsentieren, der durch eines der Zifferntripel 000 oder 111 dargestellt wird, werden als passive Grundspannungsraumzeiger oder Nullspannungsraumzeiger bezeichnet.

Erfindungsgemäß werden die Schaltzustände der Halbbrücken 5, 6, 7 mit einer Raumzeigermodulation mit einer Pulsperiode gesteuert. Dabei wird wie üblich für jede Pulsperiode ein Sollraumzeiger 13 für einen über die Pulsperiode gemittelten Schaltzustandsmittelwert der Schaltzustände der Halbbrücken 5, 6, 7 vorgegeben, wobei in der Pulsperiode zwischen Schaltzuständen gewechselt wird, die von den beiden dem Sollraumzeiger 13 benachbarten aktiven Grundspannungsraumzeigern 15, 16, 17 und den beiden Nullspannungsraumzeigern oder einer Untermenge dieser Raumzeiger repräsentiert werden.

Im Unterschied zu der herkömmlichen Raumzeigermodulation wird jedoch eine Mindestverweilzeit vorgegeben und jeder von einem aktiven Grundspannungsraumzeiger 15, 16, 17 repräsentierte Schaltzustand der Halbbrücken 5, 6, 7 wird wenigstens für die Mindestverweilzeit beibehalten. Ferner wird eine Schalterstellungsmindestzeit vorgegeben und eine Schalterstellung jeder Halbbrücke 5, 6, 7 wird wenigstens für die Schalterstellungsmindestzeit beibehalten. Des Weiteren werden die Schaltzustände der Halbbrücken 5, 6, 7 nur derart geändert, dass sich je zwei aufeinander folgende Schaltzustände der Halbbrücken 5, 6, 7 nur durch die Schalterstellungen genau einer Halbbrücke 5, 6, 7 voneinander unterscheiden.

Mit diesen Vorgaben lässt sich nicht jeder von einem Sollraumzeiger 13 repräsentierte Schaltzustandsmittelwert realisieren, da die Mindestverweilzeit für durch aktive Grundspannungsraumzeiger 15, 16, 17 repräsentierte Schaltzustände der Halbbrücken 5, 6, 7 und die Schalterstellungsmindestzeit für die Schalterstellungen jeder Halbbrücke 5, 6, 7 eingehalten werden müssen. In Figur 2 sind in dem gezeigten Ausschnitt der Raumzeigerebene Bereiche dargestellt, deren Punkte realisierbare Schaltzustandsmittelwerte repräsentieren. Dies sind Dreieckflächen 19, 20 zwischen den aktiven Grundspannungsraumzeigern 15 und 16 beziehungsweise 16 und 17, die von den Zifferntripeln 100, 110, 010 und 000 (beziehungsweise 111) repräsentierten Punkte, sowie Strecken 21 bis 25, die zwischen diesen Punkten verlaufen. Die Punkte eines zwischen einer Dreieckfläche 19, 20 und den ihr benachbarten Strecken 21 bis 25 liegenden Bereichs repräsentieren dagegen nicht realisierbare Schaltzustandsmittelwerte.

Ein durch einen Punkt in der Dreieckfläche 19 repräsentierter Schaltzustandsmittelwert wird beispielsweise durch eine zeitliche Schaltzustandsabfolge 000 **→** 100 **→** 110 **→** 111 **→** 110 **→** 100 **→** 000 innerhalb einer Pulsperiode realisiert. Ein durch einen Punkt auf der Strecke 22 repräsentierter Schaltzustandsmittelwert wird beispielsweise durch einen Wechsel zwischen den Schaltzuständen 110 und 111 innerhalb einer Pulsperiode realisiert. Ein durch einen Punkt auf der Strecke 24 repräsentierter Schaltzustandsmittelwert wird beispielsweise durch eine zeitliche Schaltzustandsabfolge 100 **→** 110 **→** 100 innerhalb einer Pulsperiode realisiert. Entsprechendes gilt für die anderen realisierbaren Schaltzustandsmittelwerte. Ein Sollraumzeiger 13 mit dem Raumzeigerbetrag Null wird realisiert, indem über die gesamte Pulsperiode derselbe Nullspannungsraumzeiger eingestellt wird.

Als Mindestverweilzeit wird beispielsweise mindestens das Doppelte einer Zeitdauer zwischen einer Schaltzustandsänderung eines Schaltzustands der Halbbrücken 5, 6, 7 und der durch die Schaltzustandsänderung erzeugten Phasenspannungsänderung der Phasenspannungen der elektrischen Maschine 3 vorgegeben. Diese Zeitdauer ist beispielsweise eine Signallaufzeit eines Signals in einem den Stromrichter 1 mit der elektrischen Maschine 3 verbindenden Verbindungskabel von den Halbbrücken 5, 6, 7 zu Anschlussklemmen der elektrischen Maschine 3.

Alternativ wird als Mindestverweilzeit der Kehrwert einer von einer Längsinduktivität und einer Wicklungskapazität der elektrischen Maschine 3 abhängigen Resonanzfrequenz der elektrischen Maschine 3 vorgegeben.

In Figur 2 ist ein Sollraumzeiger 13 dargestellt, der einen nicht realisierbaren Schaltzustandsmittelwert repräsentiert, da zu dessen Realisierung der Schaltzustand 100 nur eine sehr kurze Zeit innerhalb einer Pulsperiode eingestellt werden müsste, wodurch entsprechend der oben genannten Schaltzustandsabfolge in der Dreieckfläche 19 ein fast instantaner Schaltzustandswechsel zwischen den Schaltzuständen 000 und 110 erfolgen würde und somit zwei Halbbrücken 5, 6, 7 fast gleichzeitig gleichartig umgeschaltet werden würden. In einem solchen Fall wird ein Schaltzustandsmittelwert eingestellt, der von einem wenig von dem Sollraumzeiger 13 abweichenden Ersatzraumzeiger 27 repräsentiert wird. In dem in Figur 2 gezeigten Beispiel stimmt der Raumzeigerbetrag des Ersatzraumzeigers 27 mit dem Raumzeigerbetrag des Sollraumzeigers 13 überein und der Raumzeigerwinkel des Ersatzraumzeigers 27 weicht möglichst wenig von dem Raumzeigerwinkel des Sollraumzeigers 13 ab.

Alternativ wird zur Bildung des Ersatzraumzeigers 27 eine Zeitdauer verkürzt, in der der Schaltzustand der Halbbrücken 5, 6, 7 innerhalb der Pulsperiode von einem der aktiven Grundspannungsraumzeiger 15, 16, 17 repräsentiert wird. Dabei wird vorzugsweise die Zeitdauer desjenigen aktiven Grundspannungsraumzeigers 15, 16, 17 verkürzt, der am längsten innerhalb der Pulsperiode zur Realisierung des Sollraumzeigers 13 verwendet werden würde.

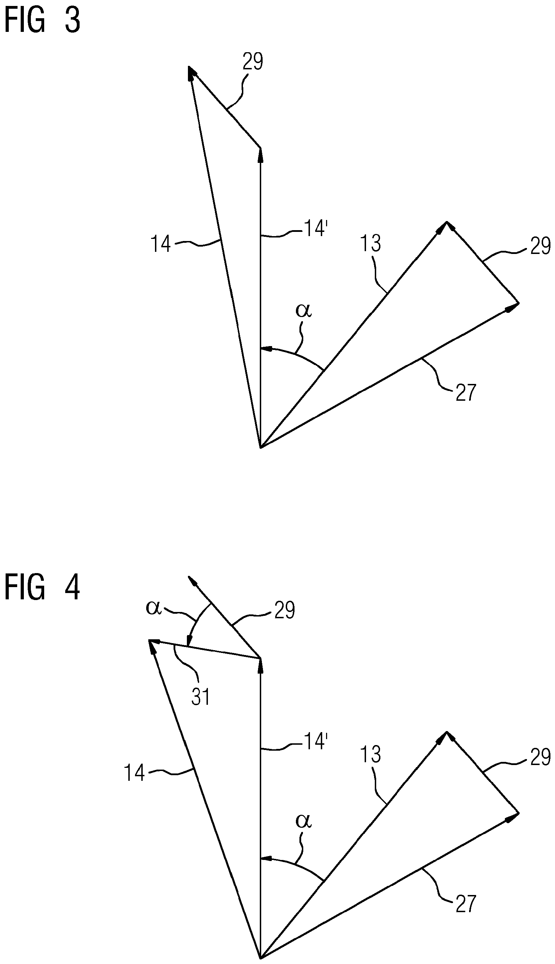

Die Figuren 3 und 4 zeigen zwei verschiedene Ausführungsvarianten der Erfindung, gemäß denen ein Sollraumzeiger 14 einer Pulsperiode der Raumzeigermodulation gebildet wird, wenn in der vorhergehenden Pulsperiode ein von dem Sollraumzeiger 13 der vorhergehenden Pulsperiode abweichender Ersatzraumzeiger 27 zur Bildung des Schaltzustandsmittelwertes der Schaltzustände der Halbbrücken 5, 6, 7 verwendet wurde. Bei beiden Ausführungsvarianten wird ein Differenzraumzeiger 29 zwischen dem Sollraumzeiger 13 und dem Ersatzraumzeiger 27 der vorhergehenden Pulsperiode gebildet und der Sollraumzeiger 14 wird gegenüber dem ursprünglich vorgegebenen Sollraumzeiger 14' in Abhängigkeit von dem Differenzraumzeiger 29 der vorhergehenden Pulsperiode modifiziert, um eine in der vorhergehenden Pulsperiode durch die Verwendung des Ersatzraumzeigers 27 anstelle des Sollraumzeigers 13 verursachte Abweichung der Spannungs-Zeit-Fläche von deren Sollwert auszugleichen.

Bei der in Figur 3 gezeigten Bildung des Sollraumzeigers 14 wird der Differenzraumzeiger 29 der vorhergehenden Pulsperiode zu dem ursprünglich vorgegebenen Sollraumzeiger 14' addiert.

Bei der in Figur 4 gezeigten Bildung des Sollraumzeigers 14 wird der Differenzraumzeiger 29 um einen Differenzwinkel α zwischen dem Raumzeigerwinkel des ursprünglich für die Pulsperiode vorgegebenen Sollraumzeigers 14' und dem Raumzeigerwinkel des Sollraumzeigers 13 der vorhergehenden Pulsperiode gedreht und der gedrehte Differenzraumzeiger 31 wird zu dem ursprünglich für die Pulsperiode vorgegebenen Sollraumzeiger 14' addiert.

Das oben anhand der Figuren 2 bis 4 beschriebene Verfahren wird vorzugsweise, beispielsweise mittels eines Parameters für den Stromrichter 1, nur aktiviert, wenn die elektrische Maschine 3 mit Phasenspannungen, deren Amplituden in einem vorgegebenen Spannungsbereich liegen, betrieben wird. Dabei wird für die Aktivierung des Verfahrens ein Spannungsbereich vorgegeben, in dem die elektrische Maschine 3 einer Spannungsbelastung ausgesetzt ist, für die sie bei einem Steuerungsverfahren mit einer herkömmlichen Raumzeigermodulation nicht ausgelegt ist. Bei Phasenspannungen außerhalb dieses Spannungsbereiches wird die elektrische Maschine 3 dagegen mit einer herkömmlichen Raumzeigermodulation gesteuert. Dadurch wird berücksichtigt, dass bei der erfindungsgemäß modifizierten Raumzeigermodulation ein Rippelstrom in der elektrischen Maschine 3 gegenüber einer herkömmlichen Raumzeigermodulation leicht ansteigt, so dass die erfindungsgemäß modifizierte Raumzeigermodulation gegenüber der herkömmlichen Raumzeigermodulation nur bei Spannungsbelastungen der elektrischen Maschine 3 vorteilhaft ist, für die sie bei einem Steuerungsverfahren mit einer herkömmlichen Raumzeigermodulation nicht ausgelegt ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Steuern einer mehrphasigen elektrischen Maschine (3), wobei
- jede Phasenspannung der elektrischen Maschine (3) mit zwei zu einer Halbbrücke (5, 6, 7) verschalteten elektronischen Schaltern (9, 10) erzeugt wird und
- die Schaltzustände der Halbbrücken (5, 6, 7) mit einer Raumzeigermodulation gesteuert werden,
- wobei eine Mindestverweilzeit vorgegeben wird und
- jeder von einem aktiven Grundspannungsraumzeiger (15, 16, 17) repräsentierte Schaltzustand der Halbbrücken (5, 6, 7) wenigstens für die Mindestverweilzeit beibehalten wird.

2. Verfahren nach Anspruch 1, wobei für jede Pulsperiode der Raumzeigermodulation ein Sollraumzeiger (13, 14) für einen über die Pulsperiode gemittelten Schaltzustandsmittelwert der Schaltzustände der Halbbrücken (5, 6, 7) vorgegeben wird, und wobei, wenn der von dem Sollraumzeiger (13, 14) repräsentierte Schaltzustandsmittelwert nicht realisiert werden kann, ein Schaltzustandsmittelwert eingestellt wird, der von einem wenig von dem Sollraumzeiger (13, 14) abweichenden Ersatzraumzeiger (27) repräsentiert wird.

3. Verfahren nach Anspruch 2, wobei der Raumzeigerbetrag des Ersatzraumzeigers (27) mit dem Raumzeigerbetrag des Sollraumzeigers (13, 14) übereinstimmt und der Raumzeigerwinkel des Ersatzraumzeigers (27) möglichst wenig von dem Raumzeigerwinkel des Sollraumzeigers (13, 14) abweicht.

4. Verfahren nach Anspruch 2, wobei zur Bildung des Ersatzraumzeigers (27) eine Zeitdauer verkürzt wird, in der der Schaltzustand der Halbbrücken (5, 6, 7) innerhalb der Pulsperiode von einem der aktiven Grundspannungsraumzeiger (15, 16, 17) repräsentiert wird.

5. Verfahren nach einem der Ansprüche 2 bis 4, wobei ein Differenzraumzeiger (29) zwischen dem Sollraumzeiger (13) und dem Ersatzraumzeiger (27) einer Pulsperiode gebildet wird und der Sollraumzeiger (14) der auf die Pulsperiode folgenden Pulsperiode in Abhängigkeit von dem Differenzraumzeiger (29) gegenüber einem ursprünglich für die folgende Pulsperiode vorgegebenen Sollraumzeiger (14') modifiziert wird.

6. Verfahren nach Anspruch 5, wobei der Sollraumzeiger (14) einer Pulsperiode durch den Differenzraumzeiger (29) der vorhergehenden Pulsperiode modifiziert wird, indem der Differenzraumzeiger (29) zu dem ursprünglich für die Pulsperiode vorgegebenen Sollraumzeiger (14') addiert wird.

7. Verfahren nach Anspruch 5, wobei der Sollraumzeiger (14) einer Pulsperiode durch den Differenzraumzeiger der vorhergehenden Pulsperiode modifiziert wird, indem der Differenzraumzeiger (29) um einen Differenzwinkel (α) zwischen dem Raumzeigerwinkel des ursprünglich für die Pulsperiode vorgegebenen Sollraumzeigers (14') und dem Raumzeigerwinkel des Sollraumzeigers (13) der vorhergehenden Pulsperiode gedreht wird und der gedrehte Differenzraumzeiger (31) zu dem ursprünglich für die Pulsperiode vorgegebenen Sollraumzeiger (14') addiert wird.

8. Verfahren nach einem der vorhergehenden Ansprüche, wobei als Mindestverweilzeit mindestens das Doppelte einer Zeitdauer zwischen einer Schaltzustandsänderung eines Schaltzustands der Halbbrücken (5, 6, 7) und der durch die Schaltzustandsänderung erzeugten Phasenspannungsänderung der Phasenspannungen der elektrischen Maschine (3) vorgegeben wird.

9. Verfahren nach einem der Ansprüche 1 bis 7, wobei als Mindestverweilzeit der Kehrwert einer von einer Längsinduktivität und einer Wicklungskapazität der elektrischen Maschine (3) abhängigen Resonanzfrequenz der elektrischen Maschine (3) vorgegeben wird.

10. Verfahren nach einem der vorhergehenden Ansprüche, wobei sich je zwei aufeinander folgende Schaltzustände der Halbbrücken (5, 6, 7) nur durch die Schalterstellungen genau einer Halbbrücke (5, 6, 7) voneinander unterscheiden.

11. Verfahren nach einem der vorhergehenden Ansprüche, wobei eine Schalterstellungsmindestzeit vorgegeben wird und eine Schalterstellung jeder Halbbrücke (5, 6, 7) wenigstens für die Schalterstellungsmindestzeit beibehalten wird.

12. Verfahren nach einem der vorhergehenden Ansprüche, das aktiviert wird, wenn die elektrische Maschine (3) mit Phasenspannungen, deren Amplituden in einem vorgegebenen Spannungsbereich liegen, betrieben wird.

13. Stromrichter (1) zur Durchführung des Verfahrens nach einem der vorhergehenden Ansprüche, der Stromrichter (1) umfassend
- für jede Phasenspannung zwei zu einer Halbbrücke (5, 6, 7) verschaltete elektronische Schalter (9, 10) und
- eine Steuereinheit (11) zur Ansteuerung der elektronischen Schalter (9, 10) gemäß dem Verfahren nach einem der vorhergehenden Ansprüche.
